Europäisches Patentamt

European Patent Office

Office européen des brevets

(11) Veröffentlichungsnummer: **0 011 132**

**A1**

# (12) EUROPÄISCHE PATENTANMELDUNG

(21) Anmeldenummer: 79103867.2

(22) Anmeldetag: 09.10.79

(51) Int. Cl.³: **B 29 D 27/00**
**C 08 L 67/06**

(30) Priorität: 13.10.78 DE 2844757
24.07.79 DE 2929992

(43) Veröffentlichungstag der Anmeldung:
28.05.80 Patentblatt 80/11

(84) Benannte Vertragsstaaten:
AT BE CH FR GB IT NL SE

(71) Anmelder: METZELER SCHAUM GMBH
Donaustrasse 51
D-8940 Memmingen(DE)

(72) Erfinder: Berger, Fritz
Piechlerstrasse 10
D-8942 Ottobeuren(DE)

(72) Erfinder: Lauterbach, Udo
Schiessstättenstrasse 11
D-8900 Augsburg(DE)

(72) Erfinder: Wetzel, Hermann
Lessingstrasse 34
D-8940 Memmingen(DE)

(74) Vertreter: Michelis, Theodor, Dipl.-Ing.
Westendstrasse 131
D-8000 München 2(DE)

(54) Verfahren zur Herstellung von Formkörpern.

(57) Bei der Herstellung von Formkörpern aus einem Schaumstoffkern und einer als Randzonenverstärkung dienenden Deckschicht wird zumindest auf einer Seite einer Platte (1) aus warmverformbaren Polyurethan-Hartschaum ein UP-Prepreg (5) aufgelegt, wobei der erwärmte Körper durch Pressen unter Aushärtung des Polyesters verformt wird.

EP 0 011 132 A1

METZELER SCHAUM GMBH ⁻ / ⁻           München, den 23.7.1979    0011132
Memmingen                            Unser Zeichen: MS 141 P 79
                                     PAT/DrM

Verfahren zur Herstellung von Formkörpern

Die Erfindung betrifft ein Verfahren zur Herstellung von Formkörpern aus einem Schaumstoffkern und einer als Randzonenverstärkung dienenden Deckschicht.

Solche Formkörper werden in großem Umfang in der Fahrzeug-,
Gehäuse-, Bau- und Möbelindustrie verwendet.

Zur Herstellung solcher Formkörper werden verschiedene Verfahren eingesetzt. So kann beispielsweise der Hohlraum zwischen
zwei vorgeformten Deckschichten ausgeschäumt werden; als
Alternative hierzu können die Deckschichten im Handauflege-
Laminierverfahren im Werkzeug hergestellt und anschließend ausgeschäumt werden; und schließlich läßt sich der fertige Schaumstoffkern noch nachträglich mit den Deckschichten kaschieren.

Alle diese Verfahren werden in der Praxis eingesetzt und haben
jeweils für die Fertigung spezieller Produkte bestimmte Vorteile. Nachteilig ist jedoch bei allen diesen Verfahren, daß
ihr Fertigungsaufwand relativ hoch ist, da wegen der hohen
Rüst- und/oder Verweil-Zeiten der Formlinge in den Werkzeugen
keine Serienfertigung solcher Formkörper möglich ist.
Dabei muß auch berücksichtigt werden, daß solche Formkörper
im allgemeinen sehr hohen Beanspruchungen ausgesetzt werden;
als Beispiel darf auf die Verwendung eines solchen Formkörpers
als Sitzschale in einem Kraftfahrzeug hingewiesen werden.
Eine solche starke Beanspruchung des Formkörpers beim Einsatz
bedingt wiederum eine sehr sorgfältige Fertigung, da bereits
geringe Fertigungsfehler, beispielsweise keine optimale Verbindung zwischen dem Schaumstoffkern und der Deckschicht, schon nach kurzem Gebrauch zu Beanstandungen führen.

Der Erfindung liegt deshalb die Aufgabe zugrunde, ein Verfahren zur Herstellung von Formkörpern der angegebenen Gattung zu schaffen, bei dem die o.e. Nachteile nicht auftreten.

Insbesondere soll ein Verfahren vorgeschlagen werden, mit dem bei geringem Fertigungsaufwand auch sehr hoch beanspruchbare Formkörper hergestellt werden können.

Dies wird bei einem Verfahren der angegebenen Gattung erfindungsgemäß dadurch erreicht, daß zumindest auf einer Seite einer Platte aus warmverformbarem Polyurethan-Hartschaum ein UP-Prepreg aufgelegt und dieser erwärmte Körper durch Pressen unter Aushärtung des Polyesters verformt wird.

Zweckmäßige Ausführungsformen sind in den Unteransprüchen zusammengestellt.

Die mit der Erfindung erzielten Vorteile beruhen darauf, daß zumindest zwei verschiedene Halbzeuge, nämlich die Platte aus warmverformbarem Polyurethan-Hartschaum und die UP-Prepregs in einem Arbeitsgang, nämlich durch Pressen, miteinander verbunden und verformt werden, wodurch sich der Fertigungsaufwand im Vergleich mit dem herkömmlichen, mehrere Arbeitsgänge erfordernden Verfahren wesentlich vereinfacht.
Weiterhin sind die verwendeten Materialien selbstklebend, so daß keine zusätzliche Klebstoffschicht aufgebracht werden muß.

Mit diesem Verfahren lassen sich auch Verbundkörper aus zwei oder mehr Lagen herstellen, beispielsweise aus einem stützenden Schaumstoffkern und zwei tragenden, hoch beanspruchbaren Deckschichten.

Dabei ergibt sich eine so innige Verbindung zwischen dem Schaumstoffkern und der bzw. den Deckschichten, daß eine Belastung der Oberfläche des Formkörpers sehr gleichmäßig auf den stützenden

- *3* -

Kern übertragen wird. Dies gilt auch dann, wenn der Schaumstoffkern nach der Verformung eine relativ ungleichmäßige, stark von der Form der Ausgangsplatte abweichende Form hat. Zur hohen Beanspruchbarkeit trägt auch wesentlich bei, daß die Deckschicht eine geschlossene Oberfläche hat, also keine Angriffspunkte vorhanden sind, wie es bei einer porösen Oberfläche,beispielsweise einer Schaumstoffoberfläche, der Fall wäre.

Nach der Aushärtung des ungesättigten Polyesterharzes ergibt sich eine sehr widerstandsfähige Deckschicht, die in Verbindung mit dem stützenden Schaumstoffkern auch höchsten Beanspruchungen gewachsen ist.

Um einen günstigen Kompromiß zwischen einer möglichst kurzen Aushärtzeit des Polyesterharzes einerseits und einer den Hartschaum noch nicht angreifenden Temperatur andererseits zu erhalten, sollten UP-Prepregs verwendet werden, die bei Temperaturen zwischen 100 und 120$^{o}$ C, insbesondere bei ca. 110$^{o}$ C, gute Fließeigenschaften und außerdem kurze Aushärtzeiten haben.

Eine Rezeptur für solche UP-Prepregs wird im folgenden angegeben.

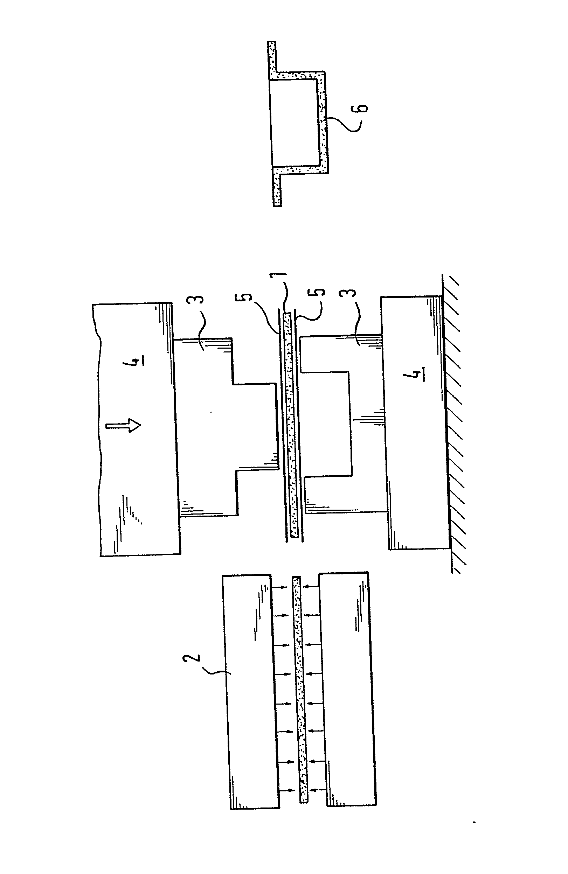

Die Erfindung wird anhand von Ausführungsbeispielen unter Bezugnahme auf die beiliegende Zeichnung näher erläutert, deren einzige Figur den Verfahrensablauf schematisch darstellt.

Eine den Kern des Formkörpers bildende Platte 1 aus warmverformbarem Polyurethan-Hartschaum wird in einer Aufheizvorrichtung 2 auf ihre Verformungstemperatur erwärmt. Diese Verformungstemperatur beträgt bei Polyäthylen-Schäumen etwa 415$^{o}$ K, bei TPI-Schäumen etwa 475$^{o}$ K.

Als Aufheizvorrichtung 2 kann beispielsweise ein Umlaufofen, IR-, UV-Strahler oder Kontaktheizplatten verwendet werden.

Während dieser Aufheizung der Platte 1 verbleiben die die Deckschichten bildenden UP-Prepregs 5 auf Raumtemperatur.

Gleichzeitig wird das Umformwerkzeug temperiert, und zwar auf eine Temperatur im Bereich von etwa 290 - 415$^o$ K; bei Verwendung von TPI-Schäumen in Verbindung mit UP-Prepregs hat sich eine Temperatur des Formwerkzeuges von etwa 375$^o$ K als zweckmäßig herausgestellt.

Die Werkzeuge bestehen aus metallischen Werkstoffen und besitzen Schneidkanten, so daß auch scharfe Ecken und Kanten gebildet werden können; außerdem müssen die mit dem Formkörper bzw. seiner Deckschicht in Berührung kommenden Oberflächen des Werkzeuges poliert sein, weil das Polyesterharz der UP-Prepregs die Werkzeugoberfläche auf dem fertigen Formkörper abbildet.

Es werden UP-Prepregs mit folgender Rezeptur verwendet:

100 Teile UP-Harz V4336

3 Teile MgO

1 Teil des Peroxides P 13 10

0,5 Teile des Peroxides Perkadox 16

0,5 Teile eines Polymerisations-Inhebitors, und zwar TBK-Lösung 10 VH

1 Teil eines Eindickbeschleunigers, und zwar V 4131,

2 Teile Zinkstearat zur Verbesserung der Fließeigenschaften.

Nach dem Aufheizen der Platte 1 aus warmverformbarem Polyurethan-Hartschaum und der Temperierung des Werkzeuges wird die Platte 1 zusammen mit den UP-Prepregs 5 zwischen die Hälften 3 des Werkzeuges gebracht und mittels einer Presse 4 verformt.

UP-Prepregs mit der o.a. Rezeptur springen bereits bei Temperaturen an, die den Polyurethan-Hartschaum auch über einen längeren Zeitraum nicht beschädigen. Unter Berücksichtigung dieses Gesichtspunktes wurde auch die Werkzeugtemperatur eingestellt.

Nachdem eine definierte Aushärtezeit verstrichen ist, wird das Werkzeug geöffnet, der fertige Formkörper 6 entnommen und auf Raumtemperatur abgekühlt. Anschließend kann der Formkörper 6, bei Bedarf, weiterbearbeitet werden.

Bei Bedarf kann ein solcher Formkörper noch mittels eines zusätzlichen Stempels vorgeformt werden, damit die Verformung und damit die Beanspruchung durch die Werkzeughälften 3 bzw. die Presse 4 nicht zu hoch wird.

0011132

Patentansprüche

1. Verfahren zur Herstellung von Formkörpern aus einem Schaumstoffkern und einer als Randzonenverstärkung dienenden Deckschicht, d a d u r c h   g e k e n n z e i c h n e t , daß
zumindest auf einer Seite einer Platte aus warmverformbarem
Polyurethan-Hartschaum ein UP-Prepreg aufgelegt wird, und daß
der erwärmte Körper durch Pressen unter Aushärtung des Polyesters
verformt wird.

2. Verfahren nach Anspruch 1 , dadurch gekennzeichnet, daß die
UP-Prepregs bei Temperaturen zwischen $100^{\circ}$ C und $120^{\circ}$ C, insbesondere bei ca. $110^{\circ}$ C gute Fließeigenschaften und kurze Aushärtzeiten haben.

3. Verfahren nach einem der Ansprüche 1 oder 2, dadurch gekennzeichnet, daß UP-Prepregs mit folgender Rezeptur verwendet werden:
100 Teile UP-Harz mit einer Säurezahl von 20 - 50, insbesondere
25 - 40,
1 - 7 Teile, insbesondere 2 - 4 Teile MgO,
0,2 - 2 Teile, insbesondere 0,2 - 1,5 Teile eines Peroxides
für die Auslösung der Aushärtung des Polyesters, und
0,2 - 2 Teile, insbesondere 0,3 - 1,0 Teile eines Polymerisations-Inhibitors.

4. Verfahren nach einem der Ansprüche 1 - 3, dadurch gekennzeichnet, daß die UP-Prepregs einen Eindickbeschleuniger zur
Verkürzung der Reifezeit der Harzmischung sowie Zinkstearat
enthalten.

5. Verfahren nach einem der Ansprüche 3 oder 4, dadurch gekennzeichnet, daß UP-Prepregs mit folgender Rezeptur verwendet werden:

(MS 138 E 79)

100 Teile UP-Harz V4336,

3    Teile MgO,

1    Teil   eines Peroxides P 1310,

0,5 Teile eines Peroxides Perkadox 16,

0,5 Teile des Polymerisations-Inhibitors TBK-Lösung 10 VH,

1    Teil   des Eindickbeschleunigers V4131,

2    Teile Zinkstearat

Europäisches
Patentamt

**EUROPÄISCHER RECHERCHENBERICHT**

0011132
Nummer der Anmeldung

EP 79 103 867.2

| Kategorie | EINSCHLÄGIGE DOKUMENTE | | KLASSIFIKATION DER ANMELDUNG (Int.Cl.³) |
|---|---|---|---|
| | Kennzeichnung des Dokuments mit Angabe, soweit erforderlich, der maßgeblichen Teile | betrifft Anspruch | |
| | DE – C – 1 131 881 (FARBENFABRIKEN BAYER AG) <br> * Spalte 3, Zeilen 44 bis 66; Beispiel 1 * <br> -- | 2,3 | B 29 D 27/00 <br> C 08 L 67/06 |
| A | DE – A1 – 2 447 852 (BASF AG) <br> * Seite 8, Zeile 30 bis Seite 10, Zeile 27; Seite 11, Zeilen 14 bis 20 * <br> -- | | |
| A | DE – A – 2 151 872 (R. ERNST) <br> * Seite 5, Zeilen 1 bis 15 * <br> -- | | **RECHERCHIERTE SACHGEBIETE (Int. Cl.³)** <br><br> B 29 C 3/00 <br> B 29 C 17/03 <br> B 29 D 3/02 <br> B 29 D 9/00 <br> B 29 D 27/00 <br> C 08 J 9/34 <br> C 08 L 67/06 |
| A | DE – A – 1 479 230 (FARBENFABRIKEN BAYER AG) <br> * Seite 3, Zeilen 4 bis 15 * <br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 11-02-1980 | BRUCK |

EPA form 1503.1 06.78